Europäisches Patentamt

European Patent Office

Office européen des brevets

(11) Veröffentlichungsnummer: **0 317 816**

**A1**

# (12) EUROPÄISCHE PATENTANMELDUNG

(21) Anmeldenummer: 88118508.6

(22) Anmeldetag: 07.11.88

(51) Int. Cl.⁴: **B01D 17/06** , **C02F 1/40** , **C02F 1/48**

(30) Priorität: 23.11.87 DE 3739580

(43) Veröffentlichungstag der Anmeldung:
31.05.89 Patentblatt 89/22

(84) Benannte Vertragsstaaten:
DE FR GB IT SE

(71) Anmelder: **Battelle-Institut e.V.**
**Am Römerhof 35 Postfach 900 160**
**D-6000 Frankfurt/Main 90(DE)**

(72) Erfinder: **Friehmelt, Volker, Dr.**
**Rheinstrasse 43**
**D-6362 Wöllstadt 1(DE)**
Erfinder: **Maier, Bernhard, Dipl.-Ing.**
**Fallweg 17**
**D-8450 Amberg(DE)**
Erfinder: **Köhling, Alfons, Dipl.-Ing.**
**Mühlstrasse 44**
**D-6232 Eschborn(DE)**
Erfinder: **Schmitt, Rolf-Eberhard, Dr.**
**Rheinstrasse 86**
**D-6505 Nackenheim(DE)**

(74) Vertreter: **Sartorius, Peter, Dipl.-Ing.**
**Battelle-Institut e.V. Abteilung Patente Am**
**Römerhof 35**
**D-6000 Frankfurt am Main 90(DE)**

(54) **Verfahren und Vorrichtung zur Spaltung eines dispersen Systems in einer elektrochemischen Zelle.**

(57) Beschrieben wird ein Verfahren und eine Vorrichtung zur Spaltung einer wäßrigen Emulsion, wobei die Emulsion durch eine elektrochemische Zelle (1) strömt, in der die kleinen emulgierten Tröpfchen sich in oder an einer Arbeitselektrode (4) zu größeren, separierbaren Tropfen vereinigen. Das Verfahren kann insbesondere auf die Spaltung einer Öl-in-Wasser-Emulsion angewendet werden.

Fig. 1

EP 0 317 816 A1

**Verfahren und Vorrichtung zur Spaltung eines dispersen Systems in einer elektrochemischen Zelle**

Die Erfindung betrifft ein Verfahren zur Spaltung einer wässrigen Emulsion, insbesondere einer Öl-in-Wasser-Emulsion sowie eine Vorrichtung zur Durchführung dieses Verfahrens.

Ölhaltige Emulsionen fallen in der Industrie an zahlreichen Stellen an. Hierzu zählen Bohr- und Schneideemulsionen bei der mechanischen Metallbearbeitung, die zum Zwecke der Kühlung und Schmierung eingesetzt werden. Es handelt sich hauptsächlich um Öl-in-Wasser Emulsionen auf Mineralölbasis, die durch Emulgatoren stabilisiert und durch weitere Zusätze für den jeweiligen Einsatz optimiert eingestellt sind. Weiter fallen ölhaltige Abwässer bei der Reinigung öl- und fetthaltiger Oberflächen an.Große Mengen ölhaltiger Wässer entstehen bei der Förderung, beim Transport und bei der Verarbeitung von Erdöl.

Eine Spaltung der Emulsionen kann aus zwei verschiedenen Gründen wünschenswert sein. Einmal gehört sie zu den wichtigsten Aufgaben der Abwasserbehandlung, um eine Verschmutzung des Oberflächen- und Grundwassers auszuschließen, zum anderen wird eine Spaltung zur Gewinnung des Ölgehalts angestrebt - hier insbesondere bei der Erdölförderung.

Für die Spaltung von Emulsionen ist eine Vielzahl von Verfahren bekannt. Neben den klassischen Verfahren wie Destillation, Säurespaltung und Adsorption wurden in letzter Zeit Ultrafiltrationsanlagen entwickelt. Nachteilig ist hierbei jedoch, daß die Filtratleistung mit steigender Ölkonzentration abnimmt und die Ultrafiltrationsmembranen gegen extreme pH-Werte und Verschmutzung empfindlich sind. Weitere Nachteile sind komplizierte Verfahrensführungen, Chemikalienzusätze und Sekundärabfälle.

Darüber hinaus sind Verfahren vorgeschlagen worden, bei denen die Trennung von Emulsionen mit Hilfe des elektrischen Stromes erfolgt. Bei der Methode der Elektroflotation erfolgt die Abscheidung der Öltröpfchen durch Gasblasen, die auf elektrolytischem Wege im Abwasser beispielsweise mit Hilfe planparalleler perforierter Elektroden am Boden des Gefäßes im Abwasser selbst erzeugt werden.

Es ist allerdings notwendig, die Emulsionen vorher chemisch zu spalten, beispielsweise durch Zusatz von Salzen oder Säuren und eventuell Flokkungsmittel zuzusetzen. Damit wird die Salzfracht des Abwassers deutlich erhöht /E.H. Baer, VDI-Berichte 185, 1972/.

In einem weiteren elektrochemischen Verfahren werden in die Suspension Eisensalze durch die anodische Auflösung von Eisen- oder Stahlanoden eingebracht, die als besonders voluminöse Hydroxide ausfallen und die Emulsion chemisch spalten. Um hier eine ausreichende Leitfähigkeit zu erhalten und um eine Passivierung der Elektroden zu verhindern, ist die Zugabe von Salzen erforderlich. Auch in diesem Fall wird die Salzfracht erhöht und das Öl als stark wasserhaltiger Schlamm gewonnen /H.H. Weintraub et al.: Electrochem. Soc. Spring Meeting May 76, Abstract No. 261/.

Weiter wird ein Verfahren zur elektrophoretischen Trennung von Emulsion in einer elektrochemischen Zelle vorgeschlagen.

Die Zelle ist durch ein Diaphragma in einen Anoden- und in einen Kathodenraum geteilt. Die Emulsion wird der Kathodenkammer zugeleitet und eine Gleichspannung angelegt. Die negativ geladenen Öltröpfchen wandern unter dem Einfluß des elektrischen Feldes durch das Diaphragma in den Anodenraum, wo die Emulsion elektrochemisch gespalten wird. Das Öl wird als separierte Ölschicht gewonnen /D.D. Snyder, R.A. Willihnganz: Proc. Ind. Waste Conf.31 1977), 782-791/. Das Verfahren arbeitet ohne Chemikalienzugabe und vermeidet die Aufsalzung des Wassers. Nachteilig bei diesem Verfahren ist, daß die Geschwindigkeit der Trennung durch die Wanderungsgeschwindigkeit der Öltröpfchen im elektrischen Feld und durch die Membran bestimmt wird und damit in weiten Grenzen von der Art der Emulsion abhängig ist. Insbesondere nichtionische Emulsionen können mit dieser Methode - elektrophoretische Wanderung der emulgierten Öltröpfchen - nicht getrennt werden. Das bedeutet eine sehr starke Begrenzung des Anwendungsbereichs. Weiter werden an das Diaphragma hohe Anforderungen gestellt; einmal muß die Porosität so hoch sein, daß die Wanderung nicht ernsthaft behindert wird, zum anderen dürfen die Poren nicht so groß sein, daß eine merkliche Rückdiffusion einsetzt. Die Eigenschaften sollen sich auch während einer langen Betriebszeit nicht ändern - beispielsweise durch Verschmutzung.

Die deutsche Offenlegungsschrift 29 10 314 beschreibt ein Verfahren zur Abtrennung von Teilchen aus Suspensionen, wobei der Suspension eine der Ladung der suspendierten Partikel entgegengesetzte elektrische Ladung zugeführt wird und die koagulierenden Teilchen mittels bekannter Verfahren abgetrennt werden. Um eine ausreichende elektrische Leitfähigkeit zu erzielen, muß die Suspension vor dem Trennvorgang stark sauer gemacht werden.

Der vorliegenden Erfindung liegt die Aufgabe zugrunde, unter Überwindung der geschilderten Nachteile der bekannten Verfahren ein Verfahren vorzuschlagen, das von der Wanderungsgeschwindigkeit der im Wasser emulgierten Teilchen im elektrischen Feld unabhängig ist und damit eine Trennung unterschiedlicher Emulsionen erlaubt.

Die Erfindung besteht in der Anwendung des durch die erwähnte Offenlegungsschrift an sich bekannten Verfahrens zur Spaltung eines dispersen Systems, wobei das das disperse System enthaltende Medium durch einen Elektrodenraum strömt, in dem dem System mittels einer Arbeitselektrode elektrische Ladungen zugeführt bzw. von ihm abgeführt werden, so daß feinste Bestandteile des Systems sich zu größeren Gebilden vereinigen, die dann vom restlichen Medium abgetrennt werden können, auf die Spaltung einer wäßrigen Emulsion.

Während das bekannte Verfahren nach der deutschen Offenlegungsschrift 29 10 314 die Abtrennung von Teilchen nach dem beschriebenen Prinzip aus stark sauren Suspensionen beschreibt, war es nicht zu erwarten, daß nach diesem Verfahren auch wäßrige, ionisch und nichtionisch stabilisierte Emulsionen erfolgreich gespalten werden können, insbesondere weil nicht zu erwarten war, daß Emulsionen eine ausreichende elektrische Leitfähigkeit haben, um die hier notwendigen Stromdichten überhaupt aufbringen zu können, und auch weil der den im Wasser emulgierten Teilchen durch das Wasser bei deren Vereinigung entgegen wirkende Widerstand, verglichen mit einer Suspension, um ein Vielfaches höher ist. Es war außerdem nicht zu erwarten, daß der Film des sich abscheidenden Emulsionsbestandteils (Öls) den Prozeß nicht unwirtschaftlich macht oder ganz verhindert. Versuche haben ergeben, daß der Prozeß in überraschender Weise durch die erfindungsgemäße Verfahrensführung möglich ist.

Insbesondere ist das erfindungsgemäße Verfahren zum Spalten einer Öl-in-Wasser-Emulsion geeignet, wo sich ganz wesentliche Vorteile in der praktischen Anwendung dieses Verfahrens ergeben.

Es ergeben sich in der erfindungsgemäßen Verfahrensführung Vorteile, wenn eine anionische stabilisierte Emulsion verwendet wird, wobei dann die Anode als Arbeitselektrode geschaltet ist.

Unter gewissen Verfahrensbedingungen kann es vorkommen, daß einer der Bestandteile der Emulsion, beispielsweise Öl, sich an der Arbeitsfläche der Arbeitselektrode absetzt und deren Wirksamkeit daher, zumindest nach einer gewissen Betriebszeit, fühlbar verringert. Um dies zu vermeiden, wird es bevorzugt, wenn der Emulsion ein Additiv zugesetzt wird, welches eine derartige Filmbildung verringert oder ganz verhindert.

Die erwähnte DE-OS 29 10 314 beschreibt eine Vorrichtung zur Abtrennung von Teilchen aus Suspensionen, wobei die Suspension in einem Kreislauf durch eine Elektrokoagulationzelle geführt wird, die über ein Diaphragma in einen Kathodenraum und einen Anodenraum unterteilt ist. Im Kathodenraum befindet sich die Kathode, die dort als Arbeitselektrode geschaltet ist. Über die Eigenschaften des Diaphragmas wird dort nichts ausgesagt. Der Kreislauf wird durch ein Vorratsgefäß mit Pumpe, Ventil und Rotameter ergänzt.

Zur Durchführung des erfindungsgemäßen Verfahrens werden nun grundsätzlich wesentliche Bauelemente, wie sie in dieser Druckschrift beschrieben sind, verwendet, nämlich insbesondere eine Elektrokoagulationszelle, die den Elektrodenraum mit der Arbeitselektrode und der Gegenelektrode ausbildet. Die Vorrichtung wird aber erfindungsgemäß nicht zum Abtrennen von Teilchen aus Suspensionen verwendet, sondern zum Spalten einer Emulsion.

Auch bei der erfindungsgemäßen Vorrichtung ist es vorteilhaft, ein Diaphragma vorzusehen, daß den Elektrodenraum in einen Kathodenraum und einen Anodenraum unterteilt.

Neu und gleichzeitig vorteilhaft gegenüber der erläuterten bekannten Vorrichtung ist es, wenn erfindungsgemäß das Diaphragma als eine Ionenaustauschermembran ausgebildet ist, die für die Emulsion undurchlässig ist. Bei dieser wichtigen Ausgestaltung der erfindungsgemäßen Vorrichtung fließt die Emulsion nur durch den Arbeitselektrodenraum und wird dort gespalten, weil das Diaphragma also nur für Ionen durchlässig ist, nicht aber für die Emulsion oder die aus der Emulsion abgespaltenen Bestandteile, beispielsweise Öltröpfchen.

Weiterhin wird es bevorzugt, wenn in einem Kreislauf an die Elektrokoagulationszelle ein Abscheidergefäß angeschlossen ist, in dem also die Abscheidung des betreffenden Emulsionsbestandteiles erfolgt, der dann aus dem Gefäß abgezogen werden kann.

Um ein Anhaften des aus der Emulsion abgeschiedenen Bestandteils an der Arbeitsfläche der Arbeitselektrode zu vermeiden, kann auch vorgesehen sein, daß an der Arbeitselektrode ein Abstreifer anliegt. Dieser wird längs der betreffenden Fläche bewegt und verhindert dadurch ein Zusetzen der betreffenden Elektrodenfläche.

Hierfür wird es bevorzugt, wenn der Abstreifer als ein magnetischer Stab ausgebildet ist, der von einem außerhalb der Zelle angeordneten, angetriebenen Magneten bewegt wird. Dies ist apparativ wenig aufwendig und es wird keine Durchbohrung der Zellenwand zwecks Antrieb des Abstreifers benötigt, obgleich auch dies für die Bewegung des Abstreifers möglich ist.

Die Arbeitselektrode kann als ein Blech, ein Netz oder eine Schüttung ausgebildet sein. In vorteilhafter Weise zeichnet sie sich durch eine möglichst große spezifische Oberfläche aus.

Außerdem wird es bevorzugt, wenn die Arbeitselektrode aus einem korrosionsbeständigen Material besteht. Dadurch wird vermieden, daß die Arbeitselektrode korrodiert bzw. sich auflöst, was eine zusätzliche Beladung der zu spaltenden Emulsion ergeben würde, beispielsweise von Abwässern durch Metallsalze usf. An dieser Stelle sei erwähnt, daß ein weiteres bevorzugtes Einsatzgebiet des erfindungsgemäßen Verfahrens und der erfindungsgemäßen Vorrichtung die Abwasserreinigung ist.

Das Verfahren kann auch so geführt werden, daß in der Zelle kein Diaphragma vorgesehen ist. Die Spaltung der Emulsion erfolgt auch hier in einer ungeteilten Zelle durch die Koagulation des betreffenden Emulsionsbestandteils (Öls) im Bereich der Arbeitselektrode. Allerdings ist hier zu berücksichtigen, daß Diffusionen und Konvektionen innerhalb der Zelle nicht vermieden werden können, so daß die Spaltung teilweise durch eine Rükkemulgierung wieder aufgehoben wird. Aus diesem Grunde sollte dieses Verfahren ohne Diaphragma insbesondere bei niedrigen Stromstärken und niedriger Klemmspannung durchgeführt werden, wodurch dann längere Reaktionszeiten und grössere Strommengen notwendig werden.

Es ist auch möglich, das Verfahren so zu führen, daß die durch den Arbeitselektrodenraum strömende und kationisch stabilisierte Emulsion durch Umpolung der Elektroden an der dann als Kathode geschalteten Arbeitselektrode gespalten wird.

Im allgemeinen sollte man das Verfahren so führen, daß praktisch keine Gasentwicklung an der Arbeitselektrode während der Spaltung entsteht. Erst nach Beendigung der Spaltung der Emulsion ergibt sich eine erkennbare Gasentwicklung an der Arbeitselektrode, die dann ein Anzeichen für die Beendigung des Spaltvorganges ist.

Die Erfindung wird im folgenden anhand von Ausführungsbeispielen näher erläutert, aus denen sich weitere wichtige Merkmale ergeben. Es zeigt:

Fig. 1 - schematisch eine erste Ausführungsform einer Vorrichtung zur Spaltung einer Emulsion;

Fig. 2 - gibt die Ergebnisse gemäß den folgenden Beispielen 1 bis 3 wieder;

Fig. 3 - zeigt schematisch eine Laboratoriumsanordnung mit einem mechanischen Abstreifer;

Fig. 4 - zeigt eine Anordnung ähnlich Fig. 3, wobei der mechanische Abstreifer durch ein Additiv in der Emulsion ersetzt ist;

Fig. 5 - zeigt die mit den Anordnungen nach Fig. 3 bzw. 4 erzielten Ergebnisse.

Eine erfindungsgemäße Elektrokoagulationszelle 1 ist durch ein Diaphragma 2 in einen Anodenraum 3 mit einer Anode 4 und in einen Kathodenraum 5 mit einer Kathode 6 geteilt. Das Diaphragma 2 besteht vorzugsweise aus einer öl-bzw. emulsionsundurchlässigen Membran, um eine Vermischung der Flüssigkeiten des Arbeits- und Gegenelektrodenraumes weitgehend zu verhindern. Als Anodenmaterial können -neben Edelmetallen - auch platiniertes Titan, Tantal oder Niob, Nickel oder Graphit verwendet werden. Solche Elektroden sind ebenso beständig wie Platin und werden heute in großtechnischen Prozessen eingesetzt. Als Kathoden material können unter den herrschenden Bedingungen beständige Materialien, z.B. Titan, platiniertes Titan, Tantal, Graphit u.a.m. verwendet werden.

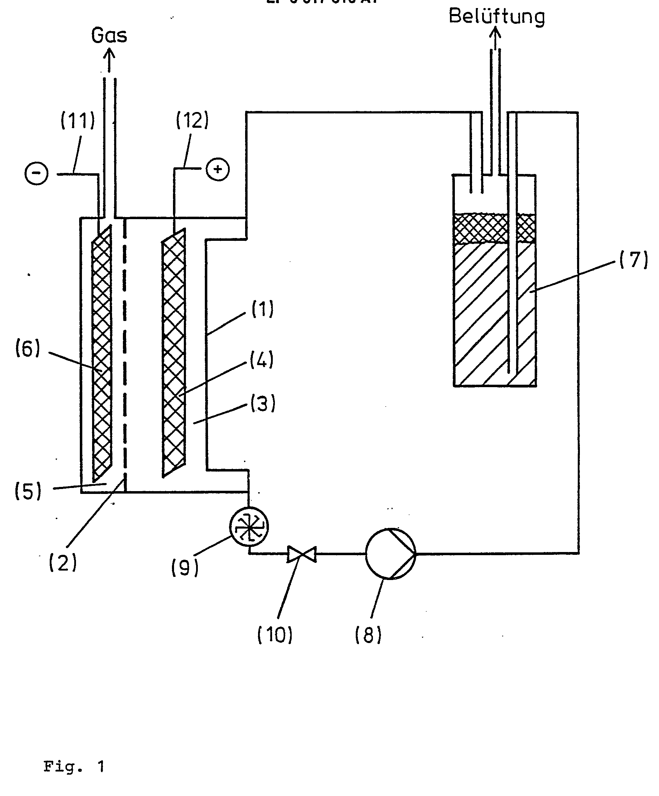

Gemäß der in Fig. 1 dargestellten Ausführungsform strömt eine Suspension aus einem Abscheider- und Vorratsgefäß 7 mit Hilfe einer Pumpe 8 in Richtung des Pfeiles 11 zur Elektrokoagulationszelle 1. Hier tritt die Suspension von unten in den Anodenraum 3 ein, strömt an der hier als Arbeitselektrode geschalteten Anode 4 vorbei und fließt dann in den Behälter 7 zurück.

Die Strömungsgeschwindigkeit kann mit einem Rotameter 9 gemessen, mit der Pumpe 8 oder mit einem Ventil 10 reguliert werden.

Der Elektrolytraum der Kathode 5 ist mit Wasser bzw. einer leitfähigen waßrigen Lösung gefüllt und durch die Ionenaustauschermembran vom Anodenraum abgetrennt.

An die Stromzuführungen 11 und 12 wird eine Spannungsquelle angeschlossen und der Strom so einreguliert, daß ein vorher bestimmter Grenzwert nicht überschritten wird.

Durch den fließenden Gleichstrom wird den dispergierten Tröpfchen (Öltröpfchen) eine elektrische Ladung zugeführt, wodurch sie sich zu größeren, separierbaren Tropfen vereinigen.

Die abgereicherte Emulsion und das abgeschiedene Öl verlassen die Zelle und fließen in den Behälter 7 zurück. Die Emulsion wird solange umgepumpt, bis die gewünschte Abreicherung an emulgiertem Medium (Öl) erreicht ist.

Bei kontinuierlicher Betriebsweise kann die Emulsion weiteren Koagulationszellen zugeführt werden.

Der abgespaltene Bestandteil (Öl) der Emulsion wird von der Oberfläche der Emulsion im Gefäß 7 durch bekannte Mittel abgenommen, beispielsweise durch einen Auslaß 12 abgeführt. Öffnungen 13,14 dienen zur Be- bzw. Entlüftung der Gefäße 1 bzw. 7.

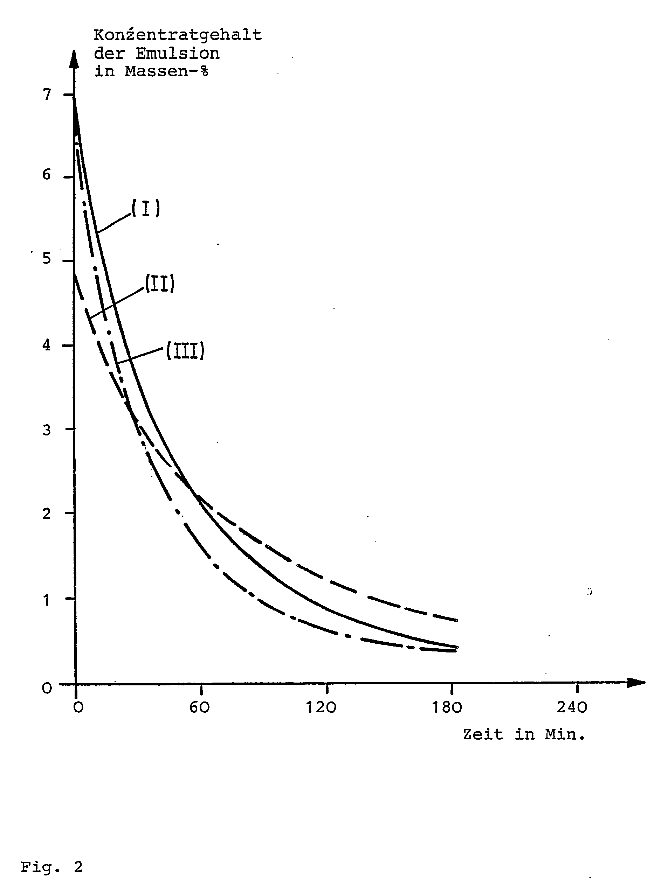

Fig. 2 zeigt die Ergebnisse der mit der Vorrichtung nach Fig. 1 durchgeführten Emulsionsspaltung. Dabei ist über der Zeit (in Minuten) der Konzentrationsgehalt der Emulsion in Massenprozent aufgetragen. Die Kurven I und III zeigen die Elektrokoagulationsversuche an im Kreislauf geführten anionisch stabilisierten Emulsionen und Kurve II zeigt die Ergebnisse einer ebenfalls im Kreislauf geführten, nicht ionisch stabilisierten Emulsion. Hierauf wird weiter unten noch näher eingegangen.

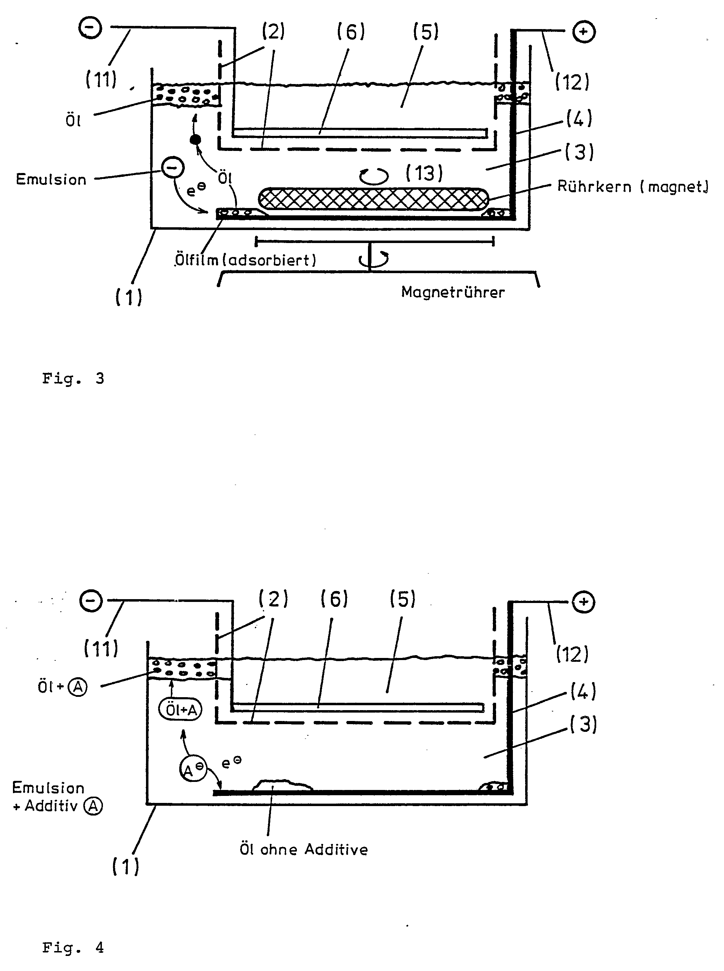

Die Fig. 3 und 4 zeigen Laboratoriumsvorrichtungen, wobei die Emulsion nicht in einem Kreislauf geführt wurde. Grundsätzlich ist bezüglich der Zelle 1 derselbe Aufbau wie in Fig. 1 gegeben und es werden dieselben Bezugsziffern verwendet. Die Arbeitselektrode 4 ist hier im unteren Bereich des Behälters 1 liegend angeordnet. Auf ihrer aktiven Oberseite befindet sich ein magnetischer Rührkern 15. Außerhalb des Gefässes 1 und benachbart dem Rührkern 15 ist ein Magnetrührer 16 vorgesehen, der über eine geeignete Anordnung auf Drehung angetrieben wird. Er bewegt den Rührkern 15, so daß dieser bei seiner Bewegung den auf der aktiven Oberfläche der Arbeitselektrode 4 abgeschiedenen Ölfilm abstreift und aufsteigen läßt, wie dies zeichnerisch angedeutet ist. Es ergibt sich dann eine auf der Oberfläche der Emulsion schwimmende Ölschicht 17. Der sich auf der aktiven Fläche der Arbeitselektrode bildende Ölfilm ist bei Pos. 18 angedeutet. Außerdem ist schematisch dargestellt, wie ein negativ geladenes Teilchen 19 der Emulsion durch die positiv geladene Arbeitselektrode (Anode) 4 angezogen wird und sich dort abscheidet zwecks Bildung größerer Öltröpfchen 20, die dann zur Oberfläche aufsteigen und die Ölschicht 17 bilden.

In Fig. 3 wird die Elektrokoagulation einer anionisch stabilisierten Emulsion ohne Umpumpen mit mechanischem Abstreifer an der Arbeitselektrode (hier Anode) gezeigt, und zwar in einer Laborvorrichtung.

Fig. 4 zeigt grundsätzlich denselben Aufbau wie Fig. 3, bei allerdings auf den Abstreifer 15 mit dem Magnetrührer 16 verzichtet wird. Stattdessen enthält die Emulsion ein geeignetes Additiv 21 zur Vermeidung bzw. Minimierung einer Ölfilmbildung auf der Arbeitselektrode. Auch die Emulsion nach Fig. 4 ist anionisch stabilisiert. Bei Pos. 22 ist angedeutet, wie sich Öl ohne Additiv auf der Oberfläche der Arbeitselektrode abscheidet.

In den nachfolgenden Beispielen werden Versuche beschrieben, die sowohl mit einer im Kreislauf arbeitenden Laborvorrichtung (Fig. 1) als auch in Laborvorrichtungen ohne Umpumpen (Fig. 3,4) durchgeführt werden. Die Versuchsvolumina betrugen 100 bis 200 ml.

Beispiel 1:

Eine handelsübliche Emulsion mit einem Konzentratgehalt von 7 Gew.-% entsprechend einem Ölgehalt von 3,5 Gew.-% und einem anionischen Emulgator wurde in das Vorratsgefäß eingefüllt, auf etwa 50°C temperiert und mit einer Strömungsgeschwindigkeit von 2 l/h durch den Anodenraum der Koagulationszelle gepumpt. Als Elektrodenmaterial wurde für die Anode als Arbeitselektrode ein platiniertes Titan-Streckmetall und für die Kathode als Gegenelektrode Titan-Streckmetall eingesetzt. Die geometrische Oberfläche der Anode betrug etwa 50 cm². Dann wurde die Zelle mit einem Gleichstrom von 0,5 A entsprechend einer Stromdichte von ca. 10 mA/cm² belastet. Als Maß für die Geschwindigkeit der Koagulation diente die zeitliche Abnahme der Ölkonzentration. Das Ergebnis des Versuchs ist als Kurve I in Fig. 2 gezeigt.

Auf der Abszisse ist die Versuchsdauer in Stunden und auf der Ordinate der zugehörige Konzentratgehalt in Gew.-% aufgetragen. Es zeigt sich zunächst eine rasche Abnahme der Ölkonzentration, die sich mit geringer werdendem Ölgehalt verlangsamt. 90 % des ursprünglichen Ölgehalts werden in einem Zeitraum von etwa 2 Stunden koaguliert. Das Fortschreiten der Koagulation kann auch visuell verfolgt werden, die vorher milchig blau gefärbte Lösung wird immer heller und scheint am Ende optisch klar. Die koagulierten Öltröpfchen ergaben eine separate Schicht im Vorratsbehälter.

Beispiel 2:

Unter den gleichen bedingungen wie in Beispiel 1 wurde eine grün-gelb fluoreszierende Emulsion mit einem Konzentratgehalt von 5 Gew.-% entsprechend einem Ölgehalt von 1 Gew.-% behandelt. Im Vergleich zur Koagulation von anionischen Emulsionen läuft hier die Koagulation etwas langsamer ab. 90% des ursprünglichen Ölgehalts wurden in etwa 3 Stunden koaguliert. Das Versuchsergebnis ist als Kurve II in Fig. 2 gezeigt.

Beispiel 3:

Für diesen Versuch wurde das freie Volumen des Elektrodenraums der Arbeitselektrode mit groben Spänen aus platiniertem Titan ausgefüllt. Diese Schüttung ist so porös, daß die Strömungsgeschwindigkeit der Emulsion nicht merklich beeinflußt wird. Unter sonst gleichen Bedingungen wie in Beispiel 1 - 200 ml einer anionischen Emulsion, Arbeitstemperatur 50°C, Stromstärke 0,5 Ampere - wurde die Koagulationsgeschwindigkeit erhöht. 90% des ursprünglichen Ölgehalts wurden in etwa 90 Minuten koaguliert. Das Versuchsergebnis ist als Kurve III in Fig. 2 gezeigt.

Beispiel 4:

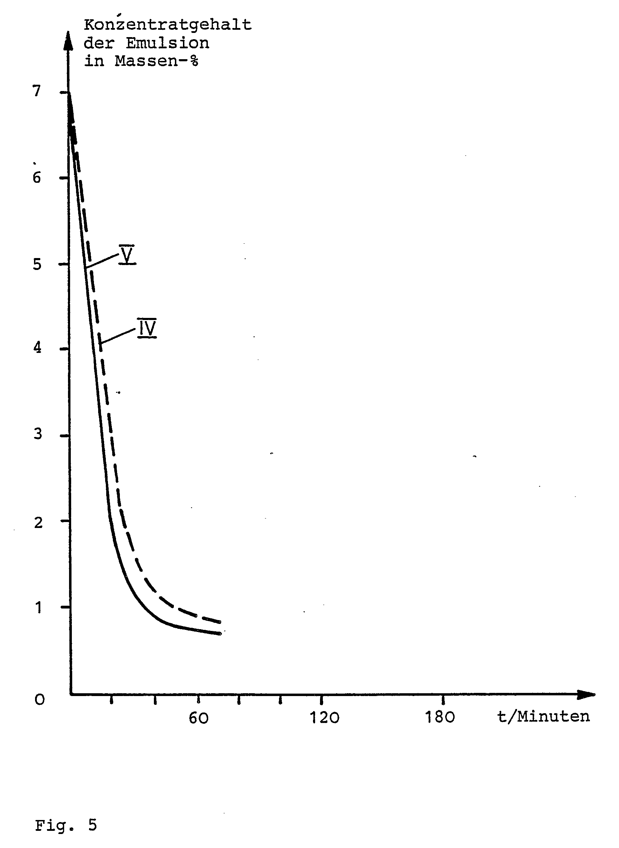

Die Wirkungsweise eines mechanischen Abstreifers 13 (Fig. 3) wurde in einer Vorrichtung ohne Umpumpen an Blechelektroden bestimmt. In einem Glasgefäß mit 100 ml der anionischen Emulsion wurde die Ölfilmbildung kontinuierlich durch einen magnetisch bewegten Rührkern auf einer horizontal angeordneten Anode abgestreift. Im Vergleich zu Parallelversuchen ohne mechanisches Abstreifen des Ölfilms verlief die Emulsionsspaltung mit mechanischem Abstreifen des Ölfilms um Faktor 2 - 4 schneller. Bei Versuchen ohne Abstreifen des Ölfilms sinkt die Stromstärke trotz konstanter Klemmspannung mit zunehmender Versuchsdauer ab. Bei kontinuierlichem Abstreifen des Ölfilms wird eine derartige Abnahme der Stromstärke nicht beobachtet. Das Versuchsergebnis ist als Kurve IV in Fig. 5 gezeigt.

Beispiel 5:

In gleicher Weise wie ein mechanisches Abstreifen des Ölfilms wirkt sich der Zusatz von Additiven aus, z.B. von Ethylacetat, Heptan, Petrolether oder Mischungen derartiger Verbindungen (Fig. 4). Derartige Additive werden offenbar von den emulgierten Öltröpfchen aufgenommen und minimieren durch Änderung der physikalischen Öleigenschaften - Verringerung der Dichte und der Adsorptionsfähigkeit - weitgehend die Ausbildung eines Ölfilmes. Gegenüber Parallelversuchen ohne Additive verläuft die Emulsionsspaltung um Faktor 3 - 5 schneller. Das Versuchsergebnis ist als Kurve V in Fig. 5 gezeigt.

Die ggf. vorteilhafterweise einzusetzenden, die Ölfilmbildung minimierenden Additive lassen sich praktisch quantitativ vom abgeschiedenen Öl, z.B. durch Destillation bei niedrigen Temperaturen, zurückgewinnen und dem Prozeß wieder zuführen.

**Ansprüche**

1. Anwendung des Verfahrens zur Spaltung eines dispersen Systems, wobei ein das disperse System enthaltendes Medium durch einen Elektrodenraum strömt, in dem dem System mittels einer Arbeitselektrode elektrische Ladungen zugeführt bzw. von ihm abgeführt werden, so daß feinste Bestandteile des Systems sich zu größeren Gebilden vereinigen, die dann vom restlichen Medium abgetrennt werden können, auf die Spaltung einer wäßrigen Emulsion.

2. Verfahren nach Anspruch 1,
**dadurch gekennzeichnet,**
daß eine Öl-in-Wasser-Emulsion gespalten wird.

3. Verfahren nach Anspruch 1 oder 2,
**dadurch gekennzeichnet,**
daß eine nichtionisch oder anionisch stabilisierte Emulsion verwendet wird.

4. Verfahren nach einem der Ansprüche 1 bis 3,
**dadurch gekennzeichnet,**
daß der Emulsion ein Additiv zugesetzt ist, das eine Filmbildung eines der Bestandteile der Emulsion auf der Arbeitselektrode verringert.

5. Vorrichtung zur Durchführung des Verfahrens nach einem der Ansprüche 1 bis 4,
**dadurch gekennzeichnet,**
daß wie an sich bekannt, eine Elektrokoagulationszelle (1) vorgesehen ist, die den Elektrodenraum mit der Arbeitselektrode (4;6) und der Gegenelektrode (6;4) ausbildet.

6. Vorrichtung nach Anspruch 5,
**dadurch gekennzeichnet,**
daß, wie an sich bekannt, ein Diaphragma (2) vorgesehen ist, das den Elektrodenraum in einen Kathodenraum (5) und einen Anodenraum (3) unterteilt.

7. Vorrichtung nach Anspruch 6,
**dadurch gekennzeichnet,**
daß das Diaphragma (2) als eine Ionenaustauschermembran ausgebildet ist, die für die Emulsion undurchlässig ist.

8. Vorrichtung nach einem der Ansprüche 4 bis 7,
**dadurch gekennzeichnet,**
daß in einem Kreislauf an die Elektrokoagulationszelle (1) ein Abscheidergefäß (7) angeschlossen ist.

9. Vorrichtung nach einem der Ansprüche 5 bis 8,
**dadurch gekennzeichnet,**
daß an der Arbeitselektrode ein Abstreifer (15) anliegt.

10. Vorrichtung nach Anspruch 9,
**dadurch gekennzeichnet,**
daß der Abstreifer (15) als ein magnetischer Stab ausgebildet ist, der von einem außerhalb der Zelle angeordneten, angetriebenen Magneten (16) bewegt wird.

11. Vorrichtung nach einem der Ansprüche 5 bis 10,
**dadurch gekennzeichnet,**
daß die Arbeitselektrode (4;6) als ein Blech, ein Netz oder eine Schüttung ausgebildet ist.

12. Vorrichtung nach einem der Ansprüche 5 bis 11,
**dadurch gekennzeichnet,**
daß die Arbeitselektrode (4;6) aus einem korrosionsbeständigen Material besteht.

13. Vorrichtung nach einem der Ansprüche 5 oder 8 bis 12,
**dadurch gekennzeichnet,**
daß kein Diaphragma in der Zelle (1) vorgesehen ist.

Fig. 1

Fig. 2

Fig. 3

Fig. 4

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 301 887  (KUNO JAHNS) * Seite 1, Zeilen 1-4; Seite 5, Zeilen 4-14; Figur 1 * | 1-3,5,6 ,13 | B 01 D   17/06 C 02 F    1/40 C 02 F    1/48 |
| A | | 9 | |
| X | DE-B-1 249 776  (TOSHIYUKI TOKUMOTO) * Spalte 3, Zeile 35 - Spalte 5, Zeile 39; Ansprüche 1,5; Figur 1 * | 1,2 | |
| A,D | DE-A-2 910 314  (BATTELLE INSTITUT KERNFORSCHUNGSZENTRUM KARLSRUHE) * Seite 7, Zeile 23 - Seite 8, Zeile 25; Figur 1 * | 1,5,6,8 -12 | |
| A | EP-A-0 041 480  (CIBA-GEIGY AG) * Zusammenfassung; Seite 8, Zeile 10 - Seite 9, Zeile 23; Figur * | 1-3,5, 11-13 | |
| A | FR-A-2 541 130  (SOCIETE NATIONALE ELF AQUITAINE) * Zusammenfassung; Seite 3, Zeile 21 - Seite 4, Zeile 27; Figur * | 1-3,5,6 ,11,12 | RECHERCHIERTE SACHGEBIETE (Int. Cl.4) |
| A | US-A-3 970 536  (DON L. SHETTEL) * Zusammenfassung; Figur 1; Spalte 3, Zeilen 42-68; Spalte 5, Zeile 22 - Spalte 6, Zeile 5 * | 1,2,5, 11-13 | B 01 D C 02 F |
| A,D | PROCEEDINGS OF THE 31st INDUSTRIAL WASTE CONFERENCE, Perdue University Lafayette, Indiana, 4.-6. Mai 1976, Seiten 782-791, Ann Arbor Science Publishers Inc.; D.D. SNYDER et al.: "A new electrochemical process for treating spent emulsions" | | |

Der vorliegende Recherchenbericht wurde für alle Patentansprüche erstellt

| Recherchenort | Abschlußdatum der Recherche | Prüfer |
|---|---|---|
| DEN HAAG | 14-02-1989 | VAN IDDEKINGE R.E. |